# EUROPÄISCHE PATENTSCHRIFT

(11) **EP 0 752 937 B1**
(45) Veröffentlichungstag und Bekanntmachung des Hinweises auf die Patenterteilung: **12.08.1998**
(21) Anmeldenummer: 95907555.7
(22) Anmeldetag: 03.02.1995
(51) Int. Cl.: B60S 1/08, G01N 21/88

(54) **REGENSENSOR**
RAIN SENSOR
DETECTEUR DE PLUIE

(30) Priorität: 26.02.1994 DE 4406398
(43) Veröffentlichungstag der Anmeldung: 15.01.1997
(73) Patentinhaber: ROBERT BOSCH GMBH, 70442 Stuttgart (DE)
(72) Erfinder: PIENTKA, Rainer, D-77855 Achern (DE)
(86) Internationale Anmeldenummer: DE9500144
(87) Internationale Veröffentlichungsnummer: WO9523082

(56) Entgegenhaltungen:
- DE-A- 2 354 100
- DE-A- 3 532 199
- US-A- 4 701 613

## Beschreibung

### Stand der Technik

Die Erfindung geht aus von einem Regensensor nach der Gattung des Hauptanspruchs. Aus der DE-PS 23 54 100 ist ein derartiger Regensensor bekannt, der nach dem Prinzip der abgeschwächten Totalreflexion arbeitet. Hierzu wird die von einer Strahlungsquelle ausgesandte Strahlung innerhalb einer Scheibe an der Außen- und Innenfläche entlang einer Meßstrecke mehrfach totalreflektiert und anschließend von einer Strahlungsmeßeinrichtung erfaßt. Schmutzpartikel oder Regentropfen an der Außenseite verhindern die Totalreflexion und koppeln einen Teil der Strahlung aus der Scheibe. Jede Strahlungsauskopplung führt zu einer Signalschwächung, die die Strahlungsmeßeinrichtung erfaßt. In Abhängigkeit von einem vorgegebenen Auswerteverfahren werden beispielsweise Mittel zur Scheibenreinigung automatisch eingeschaltet.

Bei einem solchen Regensensor muß zusätzlich zu der von der Strahlungsquelle emittierten optischen Nutzstrahlung mit einem Störstrahlungsanteil gerechnet werden. Eine Störstrahlung ist beispielsweise die Sonnenstrahlung, die insbesondere vorhanden ist, wenn die Scheibe in einem Kraftfahrzeug angeordnet ist.

Der Erfindung liegt die Aufgabe zugrunde, einen Regensensor anzugeben, bei dem der Einfluß der Störstrahlung auf das Meßergebnis reduziert ist.

Die Aufgabe wird durch die im Hauptanspruch angegebenen Merkmale gelöst.

### Vorteile der Erfindung

Der erfindungsgemäße Regensensor ist mit einer Trennfläche ausgestattet, auf die die aus der Scheibe am Ende der Meßstrecke ausgekoppelte Nutzstrahlung und eine gegebenenfalls vorhandene Störstrahlung treffen. Die Trennfläche ist derart angeordnet, daß nur eine der beiden Strahlungen totalreflektiert wird. Die andere Strahlung dagegen tritt durch die Trennfläche. Mit dieser Maßnahme wird eine wirkungsvolle Trennung von Nutzstrahlung und Störstrahlung erreicht. Die Trennung ist ohne weiteres möglich, weil Nutz- und Störstrahlung in einem unterschiedlichen Winkelbereich auftreten. Die Nutzstrahlung verläßt die Scheibe im Bereich eines Auskoppelteils unter einem Winkel von größer 42° bezogen auf eine Senkrechte zur Scheibenoberfläche. Für die Winkelangaben wird im folgenden vorausgesetzt, daß die Brechungsindexe der Scheibe und des Auskoppelteils wenigstens näherungsweise gleich sind und etwa 1,49 betragen. Die Störstrahlung trifft auf den Bereich des Auskoppelteils prinzipiell unter einem Winkelbereich von 0° bis 180°, der dem gesamten Halbraum vor der Scheibe entspricht. In der Scheibe und im Auskoppelteil beträgt jedoch der maximale Winkel der Störstrahlung in Bezug auf eine Senkrechte zur Scheibenfläche 42°. Eine Trennung der Nutzstrahlung von der Störstrahlung ist deshalb stets möglich. Die erfindungsgemäß vorgesehene Maßnahme des Einsatzes einer Trennfläche weist den Vorteil einer einfachen Realisierbarkeit auf. Die Trennfläche ist vorzugsweise eine Begrenzungsfläche des ohnehin vorhandenen Auskoppelteils.

Vorteilhafte Weiterbildungen und Ausgestaltungen des erfindungsgemäßen Regensensors ergeben sich aus abhängigen Ansprüchen.

Eine besonders vorteilhafte Weiterbildung sieht vor, daß sowohl die Nutzstrahlung als auch die Störstrahlung nach dem Auskoppeln aus der Scheibe zunächst auf eine Reflexionsfläche treffen, an der beide Strahlungen reflektiert werden und daß beide Strahlungen erst anschließend auf die Trennfläche treffen. Die Weiterbildung weist den Vorteil auf, daß insbesondere die Nutzstrahlung in einen Winkelbereich abgelenkt werden kann, der eine vorteilhafte Anordnung der erforderlichen Strahlungsmeßeinrichtung ermöglicht.die Reflexionsfläche wird in Bezug auf die Nutz- und Störstrahlung unter jeweils einem Winkel angeordnet, der für beide Strahlungen zu einer Totalreflexion führt. Alternativ ist ein Reflexionsspiegel vorgesehen, bei dem stets der Einfallswinkel gleich dem Ausfallswinkel ist.

Eine Ausgestaltung sieht vor, daß das Auskoppelteil eine Einfärbung erhält, welche die Nutzstrahlung nicht oder nur wenig, die Störstrahlung dagegen stark absorbiert.

Eine andere vorteilhafte Weiterbildung sieht vor, daß die Nutzstrahlung aus dem Auskoppelteil mit einer Sammellinse auf die Strahlungsmeßeinrichtung fokussiert oder abgebildet wird. Weitere vorteilhafte Maßnahmen, die eine Reduzierung der gegebenenfalls noch vorhandenen restlichen Störstrahlung bewirken, sehen den Einsatz eines Filters, dessen Wellenlänge im Durchlaßbereich auf die Wellenlänge der Nutzstrahlung abgestimmt ist, sowie den Einsatz einer Blende vor, die der Strahlungsmeßeinrichtung vorgeschaltet ist.

Eine vorteilhafte Weiterbildung betrifft die Ausgestaltung einer der Reflexions- oder der Trennfläche gegenüberliegenden Randfläche des Auskoppelteils. Auf diese Randfläche trifft nur die Störstrahlung. Eine stufenförmige Ausbildung dieser Randfläche, derart, daß die auf die Randfläche treffende Störstrahlung durch Mehrfachreflexionen absorbiert werden kann, reduziert den Störstrahlungsanteil, der durch beispielsweise diffuse Reflexion als Reststörstrahlung von dieser Randfläche ausgehen könnte. Eine alternative Ausgestaltung der Randfläche sieht vor, daß die Randfläche derart angeordnet ist, daß sie mit der auftreffenden Störstrahlung einen Winkel bildet, bei dem keine Totalreflexion auftritt. Der Störstrahlungsanteil, der auf die Randfläche trifft, verläßt deshalb wieder das Auskoppelteil durch diese Randfläche.

Weitere vorteilhafte Weiterbildungen und Ausgestaltungen des erfindungsgemäßen Regensensors ergeben sich aus weiteren abhängigen Ansprüchen in Verbindung mit der folgenden Beschreibung.

### Zeichnung

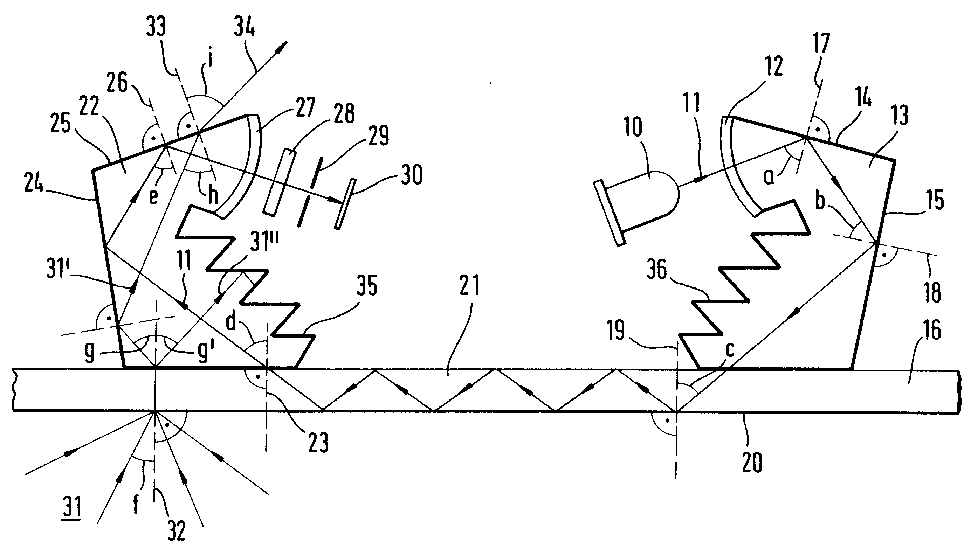

In der einzigen Figur ist ein erfindungsgemäßer Regensensor schematisch dargestellt.

### Beschreibung des Ausführungsbeispiels

Eine Strahlungsquelle 10 emittiert eine Nutzstrahlung 11, die über eine erste Sammellinse 12 in ein Einkoppelteil 13 gelangt. Die Nutzstrahlung 11 wird an einer ersten Begrenzungsfläche 14 und an einer zweiten Begrenzungsfläche jeweils totalreflektiert und anschließend in eine Scheibe 16 eingekoppelt. Der Einfallswinkel a an der ersten Begrenzungsfläche, der zwischen der Nutzstrahlung 11 und einer ersten Senkrechten 17 zur Begrenzungsfläche 14 auftritt, sowie der Winkel b, der zwischen der Nutzstrahlung 11 und einer zweiten Senkrechten 18 zur zweiten Begrenzungsfläche 15 auftritt, werden vorzugsweise jeweils derart gewählt, daß an den beiden Begrenzungsflächen 14, 15 eine Totalreflexion auftritt.

Das Einkoppelteil 13 leitet die Nutzstrahlung 17 zur Scheibe 16 weiter. Die Nutzstrahlung 11 wird in die Scheibe 16 geradlinig eingekoppelt, wenn die Brechungsindizes des Einkoppelteils 13 einerseits und der Scheibe 16 andererseits übereinstimmen. Wesentlich ist es, daß der Winkel c, der zwischen einer dritten Senkrechten 19 auf einer Scheibenoberfläche 20 und der Nutzstrahlung 11 auf einen Wert festgelegt ist, der zu einer Totalreflexion innerhalb der Scheibe 16 führt. Der Winkel c muß größer etwa 42° sein, unter der Voraussetzung, daß die Scheibe einen Brechungsindex von näherungsweise 1,49 aufweist und daß die Scheibe 16 von Luft umgeben ist. Wie bereits eingangs erwähnt, beziehen sich sämtliche Winkelangaben auf diese Voraussetzungen.

Die Nutzstrahlung 11 wird in der Scheibe 16 im Bereich einer Meßstrecke 21 wenigstens einmal, vorzugsweise jedoch mehrmals totalreflektiert. An einem Ende der Meßstrecke 21 ist ein Auskoppelteil 22 angeordnet, das die Nutzstrahlung 11 aus der Scheibe 16 auskoppelt. Die Auskopplung erfolgt unter einem Winkel d, der zwischen einer vierten Senkrechten 23 auf der Scheibenoberfläche 20 und der Nutzstrahlung 11 auftritt. Sofern wieder der Brechungsindex des Auskoppelteils 22 wenigstens näherungsweise mit dem der Scheibe 16 übereinstimmt, tritt an der Übergangsstelle kein weiterer Winkelversatz auf. Der Winkel d ist dann gleich dem Winkel c. Der Winkel d ist größer als 42°.

Die Nutzstrahlung 11 gelangt auf eine Reflexionsfläche 24, die im gezeigten Ausführungsbeispiel identisch ist mit einer Begrenzungsfläche des Auskoppelteils 22. Die an der Reflexionsfläche 24 reflektierte Nutzstrahlung 11 gelangt auf eine Trennfläche 25, die ebenfalls vorzugsweise eine Begrenzungsfläche des Auskoppelteils 22 ist. Die Nutzstrahlung 11 bildet mit einer fünften Senkrechten 26 auf der Trennfläche 25 einen Winkel e. Der Winkel e ist entweder auf einen Wert festzulegen, bei dem keine oder bei dem eine Totalreflexion auftritt. Im gezeigten Ausführungsbeispiel ist der Winkel e auf einen Wert von kleiner oder gleich 42° festgelegt, bei dem eine Totalreflexion der Nutzstrahlung 11 an der Trennfläche 25 auftritt. Die Nutzstrahlung 11 verläßt das Auskoppelteil 22 über eine zweite Sammellinse 27 und gelangt über ein auf einen Wellenlängenbereich abgestimmtes optisches Filter 28 und nach Durchgang durch eine Blende 29 auf eine Strahlungsmeßeinrichtung 30.

Im Bereich des Auskoppelteils 22 kann neben der Nutzstrahlung 11 eine unerwünschte Störstrahlung 31 in das Auskoppelteil 22 eingekoppelt werden. Die Störstrahlung 31 kann prinzipiell aus dem gesamten Halbraum vor der Scheibe 16 einfallen. Der Einfallswinkel f zwischen der Störstrahlung 31 und einer sechsten Senkrechten 32 auf der Scheibenoberfläche 20 kann daher zwischen 0° und näherungsweise 180° liegen. Der Winkelbereich von 0° bis 180° reduziert sich auf einen Winkelbereich von 0° bis 42° innerhalb des Auskoppelteils 22. Von der im Auskoppelteil 22 auftretenden Störstrahlung 31 sind lediglich zwei Randstrahlen 31', 31'' eingetragen. Der Randstrahl 31' der Störstrahlung 31 bildet mit der sechsten Senkrechten 32 auf der Scheibenoberfläche den Winkel g und der Randstrahl 31'' der Störstrahlung 31 bildet mit der sechsten Senkrechten 32 den Winkel g'. Die Winkel g, g' liegen im Bereich von 0° bis 42° und überlappen sich daher nicht mit dem Winkel d, der größer oder gleich 42° ist. Ein Teil der im Auskoppelteil 22 verlaufenden Störstrahlung 31, von dem lediglich der Randstrahl 31' gezeigt ist, wird an der Reflexionsfläche 24 reflektiert und gelangt anschließend an die Trennfläche 25. Der Winkel h tritt zwischen dem Randstrahl 31' der Störstrahlung 31 und einer siebten Senkrechten 33 auf der Trennfläche 25 auf. Wesentlich ist nun, daß der Winkel h in Abhängigkeit vom Winkel e festgelegt ist. Sofern der Winkel e auf einen Wert größer 42° festgelegt ist, also Totalreflexion der Nutzstrahlung 11 stattfindet, wird der Winkel h auf einen Wert kleiner 42° festgelegt, bei dem die Totalreflexion nicht auftritt. Sofern der Winkel e auf einen Wert kleiner 42° festgelegt ist, bei dem keine Totalreflexion der Nutzstrahlung 11 auftritt, wird der Winkel h auf einen Wert größer als 42° festgelegt, bei dem eine Totalreflexion der Störstrahlung 31 auftritt. Diejenige Strahlung 11, 31', die nicht der Totalreflexion unterliegt, verläßt das Auskoppelteil 22 unter einem Winkel i, der größer als 42° ist. Der Winkel i tritt zwischen der siebten Senkrechten 33 und der ausgekoppelten Strahlung 34 auf. Im gezeigten Ausführungsbeispiel ist der Winkel e, wie bereits beschrieben, auf einen Winkel kleiner 42° festgelegt, bei dem eine Totalreflexion auftritt. Der Winkel h ist daher auf einen Wert größer als 42° festgelegt, bei dem eine Auskopplung der Störstrahlung 31 auftritt, die das Auskoppelteil 22 als ausgekoppelte Strahlung 34 verläßt. Unter praktischen Gegebenheiten können die Winkel e und h nicht völlig unabhängig voneinander festgelegt werden. Es läßt sich aber stets ein großer Winkelbereich durch eine Drehung der Trennfläche 25 in Bezug zur Scheibenoberfläche 20 erreichen, bei dem die eine Strahlung einer Totalreflexion unterliegt, während die andere Strahlung ausgekoppelt wird. Zu beachten ist, daß im gezeigten Ausführungsbeispiel die Störstrahlung 31 mit dem Randstrahl 31' eingetragen ist, der zum maximal möglichen Winkel h führt. Bei kleineren Winkeln g ist auch der Winkel h geringer.

Die Reflexionsfläche 24 ermöglicht eine Umlenkung beider Strahlen 11, 31 in einen Winkelbereich, der eine günstige Anordnung der Strahlungsmeßeinrichtung 30 ermöglicht. Prinzipiell können anstelle einer Reflexionsfläche 24 weitere, in dem Ausführungsbeispiel nicht dargestellte Reflexionsflächen 24 vorgesehen sein. Andererseits ist es auch möglich, auf die im Ausführungsbeispiel gezeigte Reflexionsfläche 24 ganz zu verzichten. Die Nutzstrahlung 11 sowie die Störstrahlung 31 treffen dann unmittelbar auf die Trennfläche 25. Auch unter diesen Umständen ist eine zuverlässige Trennung der Nutzstrahlung 11 von der Störstrahlung 31 möglich, weil die Winkel e, h prinzipiell auch ohne Reflexion an der Reflexionsfläche 24 auftreten.

Als weitere Maßnahmen zur Unterdrückung der Störstrahlung 31 im Auskoppelteil 22 ist es möglich, das Auskoppelteil 22 derart einzufärben, daß die Nutzstrahlung 11 möglichst ungehindert passieren kann, während die zu erwartenden Wellenlängenbereiche der Störstrahlung 31 absorbiert werden. Die Festlegung der Wellenlänge der von der Strahlungsquelle 10 emittierten Nutzstrahlung 11 im Infrarotbereich ermöglicht eine dunkle Einfärbung des Auskoppelteils 22, die eine hohe Absorbtion der Wellenlängeanteile der sichtbaren Strahlung ermöglicht. Die von der Sonne verursachte Störstrahlung 31 kann mit dieser Maßnahme daher wirkungsvoll bekämpft werden. Alternativ oder ergänzend zu dieser Einfärbung kann das optische Filter 28 vorgesehen sein, das einen Durchlaßwellenlängenbereich aufweist, der auf die Wellenlänge der Nutzstrahlung 11 abgestimmt ist. Eine weitere Maßnahme betrifft die Anordnung der Blende 29, die eine Ausblendung von Anteilen der Störstrahlung 31 ermöglicht, die noch nicht beseitigt werden konnten, die aber einen zumindest geringen Winkelversatz zur Nutzstrahlung 11 aufweisen.

Eine andere wirkungsvolle Maßnahme zur Unterdrückung von Störstrahlung 31 bietet die spezielle Ausgestaltung einer der Reflexionsfläche 24 oder der Trennfläche 25 gegenüberliegenden Randfläche 35 des Auskoppelteils 22. Die Randfläche 35 ist stufenförmig ausgebildet, derart, daß die auf die Randfläche 35 treffende Störstrahlung 31, von der der Randstrahl 31'' gezeigt ist, durch Mehrfachreflexionen absorbiert wird. Die stufenförmige Ausbildung der Randfläche 35 kann als optischer Sumpf bezeichnet werden. Die Absorbtion der Störstrahlung wird durch eine schwarze Einfärbung der Oberfläche der Randfläche 35 unterstützt. Sofern die Einfärbung nicht vorgenommen ist, tritt ein Teil der Störstrahlung 31, und zwar der Teil der nicht der Totalreflexion unterliegt, durch die Randfläche 35 in den Außenbereich. Damit ist ebenfalls eine Reduzierung der Störstrahlung verbunden.

Eine vorteilhafte Weiterbildung sieht vor, daß die der zweiten Begrenzungsfläche 15 gegenüberliegende Randfläche 36 des Einkoppelteils 13 ebenfalls diese stufenförmige Ausbildung aufweist. Mit dieser Maßnahme wird einerseits eine Störstrahlung unterdrückt, die im Bereich des Einkoppelteils 13 in das Einkoppelteil 13 gelangen kann und dort in einen Winkel abgelenkt, der näherungsweise dem der Nutzstrahlung 11 bei dem Einkoppeln in die Scheibe 16 entspricht. Andererseits ist mit der stufenförmigen Ausbildung der Randfläche 36 des Einkoppelteils 13 die Möglichkeit gegeben, das Einkoppelteil 13 und das Auskoppelteil 22 identisch zu fertigen. Bei der Erstellung der Form für ein Kunststoffspritzteil ergeben sich hierbei erhebliche Einsparungen.

Ein weiterer Vorteil ist die Unterdrückung störender Strahlungsreflexion der Strahlungsquelle 10 an der Randfläche 36.

## Patentansprüche

1. Regensensor, bei dem eine optische Nutzstrahlung in einer Scheibe wenigstens einer Totalreflexion unterworfen ist, dadurch gekennzeichnet, daß die aus der Scheibe (16) am Ende einer Meßstrecke (21) in ein Auskoppelteil (22) ausgekoppelte Nutzstrahlung (11) und vorhandene Störstrahlung (31') auf wenigstens eine Trennfläche (25) treffen, an der nur eine der beiden Strahlungen (11, 31') totalreflektiert wird.

2. Regensensor nach Anspruch 1, dadurch gekennzeichnet, daß die Nutzstrahlung (11) an der Trennfläche (22) totalreflektiert wird.

3. Regensensor nach Anspruch 1, dadurch gekennzeichnet, daß wenigstens eine Reflexionsfläche (24) vor der Trennfläche (25) angeordnet ist, an der sowohl die Nutzstrahlung (11) als auch die Störstrahlung (31') reflektiert werden.

4. Regensensor nach Anspruch 1, dadurch gekennzeichnet, daß das Auskoppelteil (22) eingefärbt ist, derart, daß die Nutzstrahlung (11) durchgelassen und die Störstrahlung (31, 31'') absorbiert wird.

5. Regensensor nach Anspruch 1, dadurch gekennzeichnet, daß die Nutzstrahlung (11) aus dem Auskoppelteil (22) über eine Sammellinse (27) ausgekoppelt wird.

6. Regensensor nach Anspruch 1, dadurch gekennzeichnet, daß zwischen dem Auskoppelteil (22) und einer Strahlungsmeßeinrichtung (30), welche die Nutzstrahlung (11) erfaßt, ein optisches Filter (28) angeordnet ist, das die Nutzstrahlung (11) durchläßt und die Störstrahlung (31') sperrt.

7. Regensensor nach Anspruch 1, dadurch gekennzeichnet, daß zwischen Auskoppelteil (22) und der Strahlungsmeßeinrichtung (30) eine Blende (29) angeordnet ist.

8. Regensensor nach Anspruch 1, dadurch gekennzeichnet, daß eine der Reflexionsfläche (24) oder der Trennfläche (25) gegenüberliegende Randfläche (35) des Auskoppelteils (22), auf die nur die Störstrahlung (31'') trifft, stufenförmig ausgebildet ist, derart, daß die auf die Randfläche (35) treffende Störstrahlung (31, 31', 31'') durch Mehrfachreflexionen absorbiert wird.

9. Regensensor nach Anspruch 1, dadurch gekennzeichnet, daß eine der Reflexionsfläche (24) oder der Trennfläche (25) gegenüberliegende Randfläche (35) des Auskoppelteils (22), auf die nur die Störstrahlung (31'') trifft, in Bezug auf die Störstrahlung (31, 31', 31'') derart angeordnet ist, daß keine Totalreflexion der Störstrahlung (31, 31', 31'') auftritt.

10. Regensensor nach Anspruch 1, dadurch gekennzeichnet, daß ein Einkoppelteil (13) zum Einkoppeln der Nutzstrahlung (11) in die Scheibe (16) vorgesehen ist, das identisch aufgebaut ist wie das Auskoppelteil (22).

## Claims

1. Rainfall sensor in which useful optical radiation is subjected in a plate to at least one total reflection, characterized in that the useful radiation (11), coupled out of the plate (16) at the end of the measuring section (21) into an extracting part (22), and interfering radiation (31') present impinge on at least one separating surface (25) at which only one of the two radiations (11, 31') is totally reflected.

2. Rainfall sensor according to Claim 1, characterized in that the useful radiation (11) is totally reflected at the separating surface (22).

3. Rainfall sensor according to Claim 1, characterized in that at least one reflecting surface (24) is arranged upstream of the separating surface (25) at which both the useful radiation (11) and the interfering radiation (31') are reflected.

4. Rainfall sensor according to Claim 1, characterized in that the extracting part (22) is coloured in such a way that the useful radiation (11) is passed and the interfering radiation (31, 31'') is absorbed.

5. Rainfall sensor according to Claim 1, characterized in that the useful radiation (11) is coupled out of the extracting part (22) via a positive lens (27).

6. Rainfall sensor according to Claim 1, characterized in that arranged between the extracting part (22) and a radiation measuring device (30), which detects the useful radiation (11), is an optical filter (28) which passes the useful radiation (11) and blocks the interfering radiation (31').

7. Rainfall sensor according to Claim 1, characterized in that a stop (29) is arranged between the extracting part (22) and the radiation measuring device (30).

8. Rainfall sensor according to Claim 1, characterized in that an edge surface (35), of the extracting part (22), which is opposite the reflecting surface (24) or the separating surface (25) and on which only the interfering radiation (31'') impinges, is constructed in the shape of steps in such a way that the interfering radiation (31, 31', 31'') impinging on the edge surface (35) is absorbed by multiple reflections.

9. Rainfall sensor according to Claim 1, characterized in that an edge surface (35), of the extracting part (22), which is opposite the reflecting surface (24) or the separating surface (25) and on which only the interfering radiation (31'') impinges, is arranged with reference to the interfering radiation (31, 31', 31'') in such a way that no total reflection of the interfering radiation (31, 31', 31'') occurs.

10. Rainfall sensor according to Claim 1, characterized in that a launching part (13) which is of identical design with the extracting part (22) is provided for launching the useful radiation (11) into the plate (16).

## Revendications

1. Détecteur de pluie dans lequel un rayonnement optique utile est soumis à au moins une réflexion totale à l'intérieur d'une glace,
caractérisé en ce que
le rayonnement utile (11) qui sort, à l'extrémité d'un segment de mesure (21), dans une zone de déclenchement (22) ainsi que le rayonnement parasite (31') existant arrivent tous deux sur une surface de séparation (25) sur laquelle un seul des deux rayonnements (11, 31') est totalement réfléchi.

2. Détecteur de pluie selon la revendication 1,
caractérisé en ce que
le rayonnement utile (11) est totalement réfléchi sur la surface de séparation (22).

3. Détecteur de pluie selon la revendication 1,
caractérisé en ce qu'
en amont de la surface de séparation (25), est disposée au moins une surface de réflexion (24) sur laquelle le rayonnement utile (11) ainsi que le rayonnement parasite (31') sont tous deux réfléchis.

4. Détecteur de pluie selon la revendication 1,
caractérisé en ce que
la zone de déclenchement (22) est teintée de manière que le rayonnement utile (11) la traverse tandis que le rayonnement parasite (31, 31') est absorbé.

5. Détecteur de pluie selon la revendication 1,
caractérisé en ce que
le rayonnement utile (11) est déclenché de la zone de déclenchement (22) à travers une lentille collectrice (27).

6. Détecteur de pluie selon la revendication 1,
caractérisé en ce qu'
entre la zone de déclenchement (22) et un dispositif de mesure du rayonnement (30) opérant sur le rayonnement utile (11), est monté un filtre optique (28) laissant passer le rayonnement utile (11) et arrêtant le rayonnement parasite (31').

7. Détecteur de pluie selon la revendication 1,
caractérisé en ce qu'
un diaphragme (29) est intercalé entre la zone de déclenchement (22) et le dispositif de mesure du rayonnement (30).

8. Détecteur de pluie selon la revendication 1,
caractérisé en ce qu'
une surface marginale (35) de la zone de déclenchement (22) située en regard de la face de réflexion (24) ou de la face de séparation (25) et sur laquelle vient frapper le seul rayonnement parasite (31''), est constituée en gradins de sorte que le rayonnement parasite (31, 31', 31'') frappant cette surface (35) est absorbé par des réflexions multiples.

9. Détecteur de pluie selon la revendication 1,
caractérisé en ce qu'
une surface marginale (35) de la zone de déclenchement (22) située en regard de la face de réflexion (24) ou de la face de séparation (25) et sur laquelle vient frapper le seul rayonnement parasite (31''), est disposée, par rapport au rayonnement parasite (31, 31 , 31''), de manière que celui-ci ne subisse pas la réflexion totale.

10. Détecteur de pluie selon la revendication 1,
caractérisé en ce qu'
une pièce de connexion (13) est prévue pour faire pénétrer le rayonnement utile (11) dans la glace, cette pièce étant identique à la zone de déclenchement (22).
